(19) **Europäisches Patentamt**

**European Patent Office**

**Office européen des brevets**

(11) **EP 0 998 083 A1**

(12) **EUROPÄISCHE PATENTANMELDUNG**

(43) Veröffentlichungstag:
**03.05.2000 Patentblatt 2000/18**

(51) Int. Cl.$^7$: **H04L 25/03**

(21) Anmeldenummer: **98811090.4**

(22) Anmeldetag: **30.10.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **Ascom Systec AG**
**5506 Mägenwil (CH)**

(72) Erfinder: **Aldis, James**
**5504 Othmarsingen (CH)**

(74) Vertreter:
**Roshardt, Werner Alfred, Dipl.-Phys.**
**Keller & Partner**
**Patentanwälte AG**
**Zeughausgasse 5**
**Postfach**
**3000 Bern 7 (CH)**

(54) **Verfahren zum Entzerren, insbesondere für Offset-Modulationsarten**

(57) Die Erfindung betrifft ein Verfahren zum Entzerren eines Empfangssignals in einem digitalen Empfänger mit Hilfe einer DFB-Struktur (Decision Feedback Equalizer). Das Empfangssignal basiert auf einer eindimensionalen oder in eine solche transformierbaren Signalkonstellation (z. B. BPSK, GMSK, OQPSK). Die Koeffizienten des DFE werden so festgelegt, daß der Erwartungswert des quadrierten Realteils des Fehlers des Empfangssignals minimiert wird. Im Unterschied zum Stand der Technik wird also nicht der an sich komplexwertige Fehler als Optimierungsgrundlage verwendet. Vielmehr wird die Berechnung auf den Realwert beschränkt. Die Filterkoeffizienten können statt komplexwertig ebenfalls realwertig sein. Der springende Punkt liegt darin, daß auf diese im Prinzip einfache Weise eine Verbesserung der Performance der DFE-Struktur möglich wird, wobei sogar der Rechenaufwand gegenüber dem Stand der Technik reduziert sein kann.

Fig. 4 c

**Beschreibung**

**Technisches Gebiet**

Die Erfindung betrifft ein Verfahren zum Entzerren eines Empfangssignals in einem digitalen Empfänger mit Hilfe einer DFE-Struktur (Decision Feedback Equalizer), wobei das Empfangssignal auf einer eindimensionalen oder in eine solche transformierbaren Signalkonstellation basiert.

**Stand der Technik**

Übertragungskanäle, wie sie typischerweise bei GSM (Global System for Mobile Communication), HIPERLAN (HIgh PErformance Radio Local Area Netzwork), DECT (Data Exchange for Cordless Telephone) etc. auftreten, sind charakterisiert durch die störenden Wirkungen der Mehrweg-Ausbreitung.

Es ist bekannt, daß ein Decision Feedback Equalizer (DFE) dazu benutzt werden kann, um in einem digitalen Kommunikationssystem ein Signal zu entzerren, welches durch einen linearen frequenzselektiven Prozeß (wie es zum Beispiel die Mehrweg-Ausbreitung in einem Funkkanal ist) gestört worden ist.

Die Performance eines DFE hängt von der Qualität ab, mit welcher die Filterkoeffizienten im Feedforward- und im Feedback-Teil berechnet bzw. festgelegt werden. Bei unbekanntem Kanal werden die Koeffizienten typischerweise durch adaptives Training festgelegt. Ist die Stoßantwort (impulse response) des Kanals dagegen bekannt, dann können die optimalen Koeffizienten des DFE aus dieser abgeleitet werden.

Die Struktur eines DFE ist an sich sehr einfach und daher im Einsatz sehr beliebt. Nicht immer läßt sich aber die erwünschte Performance erreichen.

**Darstellung der Erfindung**

Aufgabe der Erfindung ist es, ein Verfahren der eingangs genannten Art anzugeben, welches mit möglichst geringem Rechenaufwand auf der Basis der bekannten bzw. vorher geschätzten Kanalstoss-Antwort die Bestimmung optimaler Koeffizienten ermöglicht, wobei gleichzeitig eine erhöhte Performance gegenüber dem bekannten DFE gemäß Stand der Technik erzielt wird.

Die Lösung der Aufgabe ist durch die Merkmale des Anspruchs 1 definiert. Gemäss der Erfindung sind die Koeffizienten des DFE so festgelegt, daß der Erwartungswert des quadrierten Realteils des Fehlers minimiert wird.

Im Unterschied zum Stand der Technik wird also nicht der an sich komplexwertige Fehler als Optimierungsgrundlage verwendet. Vielmehr wird die Berechnung auf den Realwert beschränkt. Die Filterkoeffizienten des Feedback-Filters sind nicht komplexwertig, nur diejenigen des Feedforward-Filters sind es im allgemeinen. Der springende Punkt liegt nun darin, daß auf diese im Prinzip einfache Weise eine Verbesserung der Performance der DFE-Struktur möglich wird, wobei sogar der Rechenaufwand gegenüber dem Stand der Technik reduziert sein kann.

Im Fall eines binären BPSK-Signals werden die Koeffizienten vorzugsweise gemäß den weiter unten angegebenen Formeln (I) und (II) berechnet.

Die Erfindung eignet sich nicht nur für BPSK-Signale (BPSI = Binary Phase Shift Keying), sondern auch für GMSK- und OQPSK-Modulationsverfahren (GMSK = Gaussian Minimum Shift Keying, OQPSK = Offset Quadrature Phase Shift Keying). Als eindimensionale Modulationsverfahren sind also auch solche zu betrachten, welche zwar eine zweidimensionale Signalkonstellation aufweisen, aber (mit einer geeigneten Transformation) in eine (zumindest annäherungsweise) äquivalente eindimensionale Darstellung übergeführt werden können.

Die schaltungsmäßige Umsetzung des erfindungsgemäßen Verfahrens bietet keine besonderen Schwierigkeiten. Typischerweise wird die Berechnung in einem Prozessor oder ASIC programmiert.

Die Erfindung eignet sich beispielsweise für ein HIPERLAN-System. (Eine besonders vorteilhafte System-Struktur ergibt sich z. B. aus der EP 0 795 976 A2, Ascom Tech AG) . Der sogenannte European Telecommunications Standard (ETS) definiert die technischen Charakteristiken eines drahtlosen lokalen Hochleistungsnetzwerkes (HIPERLAN). HIPERLAN ist ein kurzreichweitiges Kommunikationssubsystem mit hoher Datenrate (vgl. dazu ETSI 1995, ETS 300 652, UDC: 621 396). Der ETS-HIPERLAN-Standard ist für das Frequenzband 5.15 bis 5.30 GHz vorgesehen.

Aus der nachfolgenden Detailbeschreibung und der Gesamtheit der Patentansprüche ergeben sich weitere vorteilhafte Ausführungsformen und Merkmalskombinationen der Erfindung.

**Kurze Beschreibung der Zeichnungen**

Die zur Erläuterung des Ausführungsbeispiels verwendeten Zeichnungen zeigen:

Fig. 1    eine schematische Darstellung eines DFE;

Fig. 2        eine schematische Darstellung eines Ausführungsbeispiels;

Fig. 3        eine Darstellung der Performance des erfindungsgemäßen Verfahrens im Vergleich zum Stand der Technik.

Fig. 4a-c     eine Gegenüberstellung des Fehlerverhaltens beim Stand der Technik und bei der Erfindung:

Fig. 5        eine schematische Darstellung eines BPSK -Empfängers;

Fig. 6        eine schematische Darstellung eines GMSK-Empfängers.

**Wege zur Ausführung der Erfindung**

Im folgenden soll das Prinzip der Erfindung anhand eines Vergleichs mit dem Stand der Technik zum Ausdruck gebracht werden.

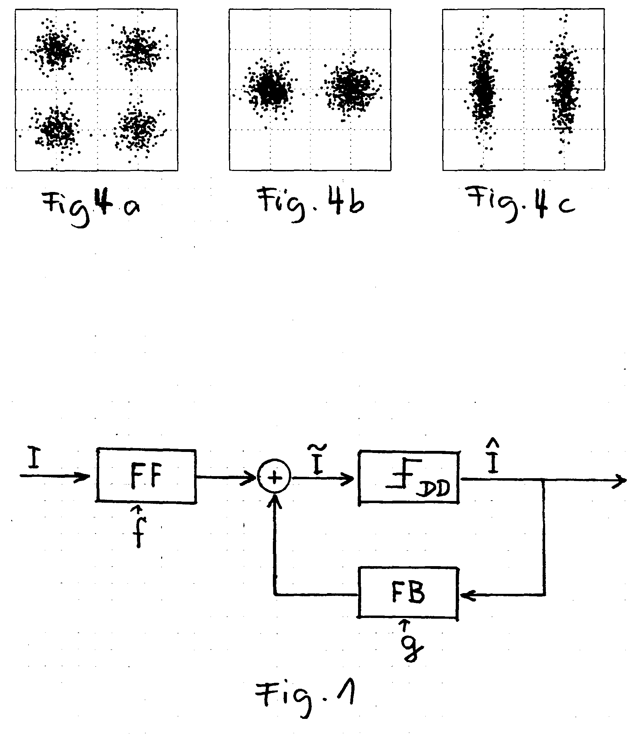

Fig. 1 zeigt die an sich bekannte Block-Struktur eines DFE. Das vom Träger heruntermodulierte Empfangssignal I wird in ein Feedforward Filter FF des DFE gegeben. Danach wird es mit dem vom Entscheider DD (Decision Device) über das Feedback Filter FB zurückgeführte geschätzte Signal $\hat{I}$ kombiniert (Addierer). Am Eingang des Entscheiders DD liegt somit das Signal $\tilde{I}$ an. Gemäß dem Stand der Technik werden die Koeffizienten **f** und **g** (welche im vorliegenden Fall als Vektoren mit mehreren Koeffizienten-Komponenten verstanden werden) wie folgt berechnet:

$$\min_{f,g} E\left\{\left|\tilde{I} - \hat{I}\right|^2\right\} \qquad \text{(A)}$$

Im Gegensatz dazu führt die Erfindung folgende Optimierung durch:

$$\min_{f,g} E\left\{\left(\operatorname{Re}\left(\tilde{I} - \hat{I}\right)\right)^2\right\} \qquad \text{(B)}$$

Der Unterschied zum Stand der Technik besteht somit in der Art der Berechnung der Filterkoeffizienten. Die sonstige Struktur des DFE wird unverändert beibehalten. Dies wird nachfolgend an Hand von Ausführungsbeispielen im Detail erläutert.

Fig. 2 zeigt ein konkretes Beispiel eines DFE. Das von ihm verarbeitete Signal wird - wie bei modernen kohärenten digitalen Empfängern üblich - durch komplexe Zahlen dargestellt. Der Realteil steht dabei für die Inphasen-Komponente und der Imaginärteil für die Quadratur-Komponente. Der in Fig. 2 gezeigte DFE hat - nach dem allgemein gängigen Verständnis - komplexwertige Koeffizienten und komplexwertige Daten.

Wird allein der Realwert des Fehlers nach dem MMSE-Kriterium optimiert (MMSE = Minimum Mean Square Error), dann sind die Feedforward-Filterkoeffizienten durch das folgende Gleichungssystem gegeben:

$$(I) \qquad h_{M+1-i}^R = \frac{\sigma^2}{2} f_i^R + \sum_{m=1}^{M} f_m^R \sum_{n=1}^{M} h_{n+1-i}^R h_{n+1-m}^R - \sum_{m=1}^{M} f_m^I \sum_{n=1}^{M} h_{n+1-i}^R h_{n+1-m}^I$$

$$- h_{M+1-i}^I = \frac{\sigma^2}{2} f_i^I - \sum_{m=1}^{M} f_m^R \sum_{n=1}^{M} h_{n+1-i}^I h_{n+1-m}^R + \sum_{m=1}^{M} f_m^I \sum_{n=1}^{M} h_{n+1-i}^I h_{n+1-m}^I$$

Dies sind 2M realwertige Gleichungen ($1 \leq i \leq M$). Koeffizienten, deren Indizes zu groß oder zu klein sind sind dabei als 0 anzunehmen. Die Indizes laufen von 1 nach L für Vektoren der Länge L. Die Werte der Filterkoeffizienten können mit an sich bekannten Methoden zur Lösung linearer Gleichungssysteme gewonnen werden. Es erübrigt sich, auf diese Standard-Methoden näher einzugehen.

Die Feedback-Filterkoeffizienten sind durch die folgenden Gleichungen bestimmt:

$$(II) \qquad g_{i-M}^{R} = -\sum_{m=1}^{M} f_{m}^{R} h_{i+1-m}^{R} - f_{m}^{I} h_{i+1-m}^{I}$$

Dies sind N -1 Gleichungen, weil $M + 1 \leq i \leq M + N -1$ .

Die Formeln (I) und (II) basieren auf folgenden Konventionen:

N        Länge der Kanalstoss-Antwort;
M        Länge des Feedforward -Filters;
$h_i^R$      Realteil der Kanalstoss-Antwort, $1 \leq i \leq N$
$h_i^I$      Imaginärteil der Kanalstoss-Antwort, $1 \leq i \leq N$
$f_i^R$      Realteil der Filterkoeffizienten des Feedforward-Teils des DFE, $1 \leq i \leq M$
$f_i^I$      Imaginärteil der Filterkoeffizienten des Feedforward-Teils des DFE, $1 \leq i \leq M$
$g_i^R$      Realteil der Filterkoeffizienten des Feedback-Teils des DFE, $1 \leq i \leq N-1$
$\sigma^2$      Rauschleistung am Eingang des DFE (Realteil und Imaginärteil der Rauschleistung kombiniert). Sofern dieser Wert nicht bekannt ist, kann er auf eine Konstante gesetzt werden, ohne daß die Performance wesentlich vermindert wird.

Meistens ist M = N . Es hat keinen Vorteil, N < M zu haben. Falls N > M kann die Komplexität zu Lasten der Performance reduziert werden. Die erfindungsgemäße Berechnung liefert aber trotzdem die optimalen Filterkoeffizienten bezogen auf den mittleren quadratischen Fehler.

Die Länge des Feedback-Filters ist gleich lang oder um eins weniger lang als die Länge der Kanalstoss-Antwort (d. h. N-1). Würde die Länge größer gewählt, würden die Koeffizienten der zusätzlichen Taps alle 0 sein. Eine geringere Länge würde zu einer Intersymbol-Interferenz führen am Eingang des Entscheiders. Weil das Hinzufügen von Taps zum Feedback Filter die Gesamtkomplexität nicht wesentlich erhöht, wird in der Regel die volle Länge verwendet.

Die Koeffizienten des Feedback-Filters haben keinen Imaginärteil. Dies deshalb, weil der Input zum Feedback-Filter realwertig ist und sein Output ebenfalls. (Der Imaginärteil des Inputs des Entscheiders wird nicht berücksichtigt.)

Die erfindungsgemäße Berechnung der Filterkoeffizienten ist für unterschiedliche Anwendungen geeignet. Im folgenden wird gezeigt, wie die Performance eines HIPERLAN-Empfängers verbessert werden kann. Dabei wird die bekannte komplexwertige MMSE-Methode der erfindungsgemäßen realwertigen MMSE-Methode gegenübergestellt. Ferner wird vorausgesetzt, daß die Empfänger eine 3-Antennen-Selection-Diversity durchführen. Simulationen der entsprechenden Empfänger ermöglichen eine Abschätzung der Paket-Fehlerrate.

Es wird angenommen, daß im Empfänger der Parameter $\sigma^2$ 10 dB und der empfangenen Signalleistung liegt. Ferner wird von Funkkanälen ausgegangen mit einem Delay Spread von 45 ns bzw. 75 ns. Der DFE hat 8 Feedforward-Taps und 7 Feedback-Taps.

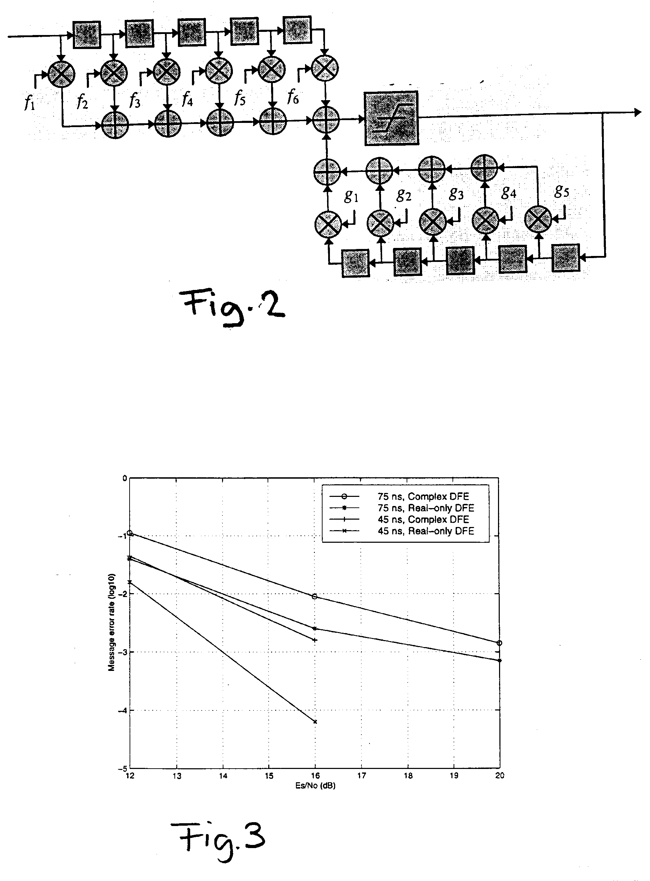

Die in Fig. 3 dargestellten Resultate zeigen eine signifikante Verbesserung beider Anwendungen der erfindungsgemäßen Berechnungsmethode. Die Fehlerrate ist höher für große Delay Spreads (75 ns). Fehlerraten unterhalb der Meßbarkeitsschwelle wurden bei 20 dB Signal-zu-Rauschen und 45 ns Delay Spread festgestellt.

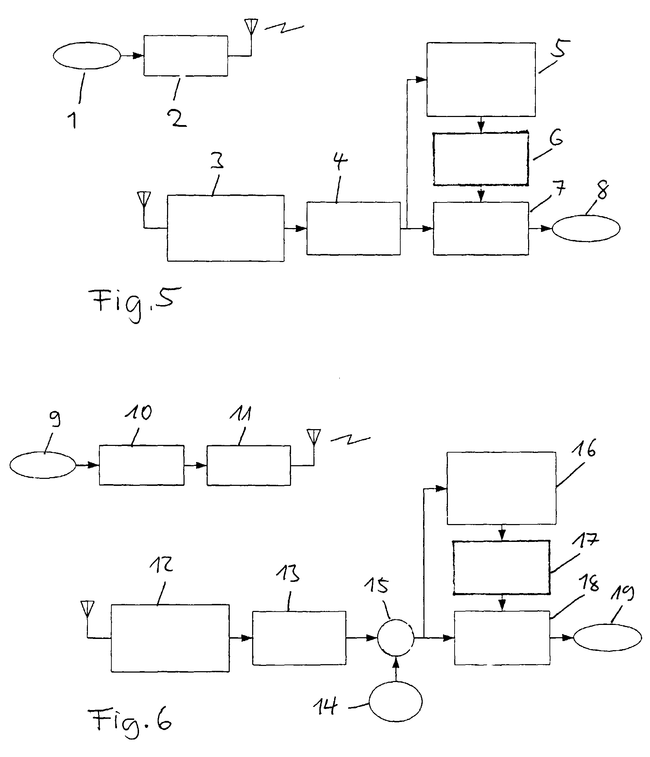

Der Effekt der erfindungsgemäßen Methode läßt sich anhand der Figuren 4a bis 4c veranschaulichen. Wird als Modulationsverfahren QPSK verwendet, gibt der Entscheider einen der vier komplexen Werte 1 + j, 1 - j, -1 + j, -1 - j aus in Abhängigkeit davon, welcher davon dem Eingangswert des Entscheiders am nächsten kommt. Der Eingangswert ist verzerrt durch das Rauschen und die nicht eliminierte Rest-Intersymbol-Interferenz. Dies ist in den Figuren 4a-c durch die wolkenartigen Verteilungen ausgedrückt.

Die Minimierung des komplexen quadratischen Fehlers führt zu einer kreisscheibenförmigen Verteilung um jeden Konstellationspunkt, wie sie in den Figuren 4a und 4b gezeigt ist. Im Gegensatz dazu führt die erfindungsgemäße Minimierung des Realteils des quadratischen Fehlers zu einer ovalen quasi gequetschen Verteilung (Fig. 4c). In der komplexen Ebene betrachtet ist der Mittelwert des (komplexwertigen) quadratischen Fehlers größer als beim Stand der Technik (Fig. 4a, b). Der Fehler ist aber in die imaginäre Achse verlagert. In der realen Achse ist er kleiner als beim Stand der Technik. Nachdem der Output des Entscheiders aber nur realwertig sein kann, spielt der erhöhte Fehler in der imaginären Achse keine Rolle.

Fig. 5 zeigt, wie die Erfindung in einem BPSK-Empfänger integriert ist. Die Daten 1 werden in einem Sender von einem BPSK-Modulator 2 einer Trägerschwingung aufmoduliert. In einem Empfänger sorgt ein Demodulator 3 für die Konvertierung des Empfangssignals in das Frequenz-Basisband und für die entsprechende Filterung. Danach wird das Signal mit der Symbolrate abgetastet (Abtaster 4). Der Ausgang des Abtasters wird einerseits vom Kanalschätzer 5 und andererseits vom DFE 7 verarbeitet. Die Berechnung der Koeffizienten gemäß der Erfindung findet im Koeffizientenrechner 6 statt. Am Ausgang des DFE 7 liegen die übertragenen Daten 8 vor. Die Struktur des Empfängers ist an sich bekannt. Neu ist die weiter oben beschriebene Art und Weise, wie die Koeffizienten im Koeffizientenrechner 6 ermittelt werden.

Grundsätzlich kann die Erfindung auch für ein QPSK-Verfahren verwendet werden (wobei die Modulatoren/Demodulatoren entsprechend auszuführen sind). Im Unterschied zum BPSK-Empfänger muß dann der DFE in jedem Fall mit komplexen Zahlen arbeiten.

Das allgemeine Schema eines GMSK-Übertragungsverfahrens ist in Fig. 6 gezeigt. Die Daten 9 werden senderseitig in einem Precoder 10 in bekannter Weise vorcodiert und mit einem GMSK-Modulator 11 einer Trägerschwingung aufmoduliert. In einem Empfänger sorgt ein Demodulator 12 für die Konvertierung des Empfangssignals in das Frequenz-Basisband und für die entsprechende Filterung. Danach wird das Signal mit der Symbolrate abgetastet (Abtaster 13). Der Ausgang des Abtasters wird mit einem Phasenfaktor $j^i$ multipliziert (Phasenschieber 14, Multiplizierer 15) und danach einerseits vom Kanalschätzer 16 und andererseits vom DFE 18 verarbeitet. Die Berechnung der Koeffizienten gemäß der Erfindung findet im Koeffizientenrechner 17 statt. Am Ausgang des DFE 18 liegen die übertragenen Daten 19 vor. Auch hier ist die Struktur des Empfängers an sich bekannt. Neu ist die Art und Weise, wie die Koeffizienten im Koeffizientenrechner 6 ermittelt werden.

Im folgenden soll erläutert werden, wie die Erfindung für GMSK und OQPSK-Modulationsverfahren eingesetzt werden kann, welche auf den ersten Blick eine zweidimensionale Signalkonstellation zu haben scheinen.

Für einen binären Bitstrom mit den Symbolen $b_k \in [-1, +1]$, $k = ... -1, 0, 1, 2...$, kann das GMSK-modulierte Signal in der komplexen Basisband-Darstellung bekanntlich wie folgt angegeben werden:

$$(III) \qquad s_o(t) = A \exp\left[ \frac{j\pi}{2} \sum_k b_k \int_{-\infty}^{t-kT} g(\tau) d\tau + \phi_o \right]$$

A und $\phi_0$ bezeichnen die Amplitude bzw. die anfängliche Trägerphase; $g(\tau)$ ist der (Gauss'sche partial-response) Puls, welcher die Phasenmodulation definiert, und T die Symbol- bzw. Bit- Dauer.

In Abhängigkeit vom Puls $g(\tau)$ kann das modulierte Signal gut durch das folgende lineare partial-response QAM-Signal angenähert werden:

$$(IV) \qquad \tilde{s}_o(t) = A \exp(j\phi_o) \sum_k \alpha_k \tilde{g}(t - kT)$$

Dabei sind die Terme $\alpha_k$ komplexwertige Daten-Symbole, welche nur von den Symbolen $b_k$ abhängen und den Wertebereich [+ 1, -1, + j, -j] haben. $\tilde{g}$ (t) ist eine partial-response Pulsformungsfunktion. Es gilt:

$$(V) \qquad \alpha_k = \exp\left( \frac{j\pi}{2} \sum_{n=-\infty}^{k} b_n \right)$$

Es ist bekannt (Baier, A. et al., "Bit Synchronization and Timing sensitivity in Adaptive Viterbi Equalizers for Narrowband-TDMA Digital Mobile Radio Systems", IEEE 1988, CH 2622-9/8/0000-0377), daß die obige Approximation sehr gut sein kann für GMSK Modulation mit einem Zeit-Bandbreiten-Produkt von 0.3 wie bei GSM und HIPERLAN eingesetzt.

Diese Approximation entspricht genau einer linearen QAM-Modulation mit Daten-Symbolen aus dem Wertebereich [+1, -1, +j, -j] Die Summe

$$\sum_{n=-\infty}^{k} b_n$$

ist abwechslungsweise gerade und ungerade, so daß die übertragenen Symbole $\alpha_k$ abwechslungsweise real und imaginär sind. Diese Modulation ist unter der Bezeichnung OQPSK (offset quadrature phase shift keying) bekannt. Der Übergang zwischen den Symbolen $\alpha_k$ und $b_k$ ist sehr einfach. Es sei darauf hingewiesen, daß der Übergang von $\alpha_k$ nach $b_k$ robust gegen Fehler ist, wohingegen dies für den umgekehrten Übergang nicht zutrifft. Ein einziger Fehler in der Sequenz $b_k$ wird sehr viele (möglicherweise unendlich viele) Fehler in der abgeleiteten Sequenz der Symbole $\alpha_k$ zur Folge haben.

Im Empfänger müssen die übertragenen Symbole $\alpha_k$ zurückgewonnen werden. Im Folgenden wird angenommen, daß dieselbe Rahmen-Synchronisation im Sender und im Empfänger zur Verfügung steht. Vom ersten Symbol $\alpha_0$ ist bekannt, daß es realwertig ist (nämlich entweder +1 oder -1). Falls das erste Symbol imaginär ist, ist eine geringfügige Anpassung des nachfolgenden Formalismus erforderlich. Das übertragene Signal ist $\tilde{s}_0(t)$ und das Empfangssignal ist r(t), welches eine Faltung mit der Kanalstoss-Antwort und den analogen Filtern des Empfängers darstellt:

$$(VI) \quad r(t) = A \sum_{k} \alpha_k h(t - kT)$$

wobei h(t) die Faltung des Übertragungssignals mit g~(t), der anfänglichen Phasenverschiebung, der Kanalstoss-Antwort und der Stoßantwort der Gesamtheit der empfängerseitigen Filter ist.

Im Empfänger wird das komplexwertige Basisband-Signal entsprechend der Kanal-Symbol-Rate abgetastet, so daß ein zeitdiskretes Signal erzeugt wird. Dieses kann wie folgt geschrieben werden:

$$(VII) \quad \hat{r}_i = A \sum_{k} \alpha_k h(iT + \lambda - kT)$$

Es wurde eine Abtastphase $\lambda$ angenommen. Ohne Einschränkung der Allgemeinheit kann $\lambda=0$ gesetzt werden, weil eine Zeitverzögerung immer in der Kanalstoss-Antwort eingeschlossen sein kann.

Bevor das Signal dem DFE zugeführt wird, wird es mit der Phase $j^{-i}$ multipliziert:

$$\check{r}_i = j^{-i} A \sum_{k} a_k h(iT - kT)$$

$$(VIII) \quad \check{r}_i = A \sum_{k} j^{-k} a_k j^{-(i-k)} h((i-k)T)$$

$$\check{r}_i = \sum_{k} c_k h((i-k)T)$$

$c_k$ ist die von $a_k$ abgeleitete Daten-Sequenz. Zu beachten ist, daß die Phase $j^{-i}$ nur die Werte [+ 1, -1, + j, -j] annehmen kann. Infolgedessen ist es sehr einfach, daß Empfangssignal mit dieser Phase zu multiplizieren (vgl. Multiplizierer 14 in Fig. 6).

$$(IX) \quad c_k = j^{-k} \alpha_k = \exp\left(\frac{-jk\pi}{2}\right) \exp\left(\frac{j\pi}{2} \sum_{n=-\infty}^{k} b_n\right) = \exp\left(\frac{j\pi}{2}\left(-k + \sum_{n=-\infty}^{k} b_n\right)\right) \in \left\{\begin{matrix}\{-1,+1\} \\ \{-j,+j\}\end{matrix}\right\}\begin{matrix}\alpha_n \in \Re \\ \alpha_n \in \Im\end{matrix}$$

Falls eine Rahmen-Synchronisation zur Verfügung steht, kann einer dieser Fälle vermieden werden. Es wird deshalb die zweite Möglichkeit ignoriert. Somit ist erkennbar, daß die empfängerseitig abgetasteten Signalwerte eine Faltung der ausschließlich realwertigen Datenfolge $c_k$ mit einer bestimmten Funktion $\check{h}$ (t) ist, welche

- die Pulsformung der Modulation,
- die Kanalstoss-Antwort,
- die anfängliche Phase des Trägersignals,
- den zeitlichen Offset der Abtastung und
- die Rotation mit der Phase $j^{-i}$ im Empfänger

enthält. Die Funktion kann beispielsweise mit Hilfe einer Trainingssequenz und einer Korrelationsberechnung im Empfänger ermittelt werden. Es ist diese Funktion, welche im Empfänger zur Berechnung der Filterkoeffizienten des DFE verwendet wird. Der DFE muß nur einen realwertigen Output erzeugen, weil die zugrundeliegenden Daten ausschließlich realwertig sind ($c_k$). Schließlich können (in Kenntnis des Index k) die ursprünglichen Daten-Symbole $\alpha_k$ ermittelt werden.

Wie weiter oben erwähnt, kann die GMSK-Modulation sehr gut durch die OQPSK-Modulation angenähert werden (vorausgesetzt das Zeit-Bandbreiten-Produkt ist bekannt und die Transformation des Datenstroms zwischen $\alpha_k$ und $b_k$ wird durchgeführt). In dieser Weise kann der erfindungsgemäße DFE auch für GMSK und OQPSK eingesetzt werden. Es ist nur eine zusätzliche aber einfache und robuste Transformation der Daten erforderlich. Wird im Sender vor der GMSK-Modulation eine Vorcodierung verwendet, kann eine zusätzliche Vereinfachung erreicht werden.

Bei einem ungünstigen Zeit-Bandbreiten-Produkt kann die erfindungsgemäße Entzerrung von GMSK zu einer geringfügig schlechteren Performance führen als bei OQPSK, weil GMSK trotz allem nach der Daten-Transformation nicht exakt linear ist. Ist das Zeit-Bandbreiten-Produkt allerdings in einer üblichen Größenordnung, können die Verschlechterungen vernachlässigt werden.

Zusammenfassend ist festzustellen, dass mit der Erfindung bei den in der Praxis sehr stark verbreiteten eindimensionalen Modulationsverfahren und unter Einsatz der vorteilhaften DFB-Struktur eine Verbesserung der Entzerrung möglich ist. Die Auswertung im Feedback-Filter kann mit Realwerten (engl. real values) statt mit Komplexwerten (engl. complex values) erfolgen. Auch der Output des Feedforward-Filters braucht nur realwertig zu sein. Entsprechend brauchen in diesem Filter nur diejenigen Berechnungen durchgeführt zu werden, welche zum Realwert des Outputs beitragen. Erfindungsgemäße Empfänger können z. B. bei GSM-Telefonen oder schnurlosen DECT Telefongeräten oder bei der Datenkommunikation zwischen Computern auf der Basis von HIPERLAN eingesetzt werden.

**Patentansprüche**

1. Verfahren zum Entzerren eines Empfangssignals in einem digitalen Empfänger mit Hilfe einer DFE-Struktur (Decision Feedback Equalizer), wobei das Empfangssignal auf einer eindimensionalen oder in eine solche transformierbaren Signalkonstellation basiert, dadurch gekennzeichnet, daß die Koeffizienten des DFE so festgelegt werden, daß der Erwartungswert des quadrierten Realteils des Fehlers des Empfangssignals minimiert wird.

2. Verfahren nach Anspruch 1, dadurch gekennzeichnet, daß die Signalkonstellation einer BPSK Modulation entspricht und daß die Koeffizienten des DFE wie folgt festgelegt sind:

$$(I)\quad h_{M+1-i}^{R} = \frac{\sigma^2}{2} f_i^R + \sum_{m=1}^{M} f_m^R \sum_{n=1}^{M} h_{n+1-i}^R h_{n+1-m}^R - \sum_{m=1}^{M} f_m^I \sum_{n=1}^{M} h_{n+1-i}^R h_{n+1-m}^I$$

$$-h_{M+1-i}^{I} = \frac{\sigma^2}{2} f_i^I - \sum_{m=1}^{M} f_m^R \sum_{n=1}^{M} h_{n+1-i}^I h_{n+1-m}^R + \sum_{m=1}^{M} f_m^I \sum_{n=1}^{M} h_{n+1-i}^I h_{n+1-m}^I$$

$$(II)\quad g_{i-M}^{R} = -\sum_{m=1}^{M} f_m^R h_{i+1-m}^R - f_m^I h_{i+1-m}^I$$

3. Verfahren nach Anspruch 1, dadurch gekennzeichnet, daß die Signalkonstellation einer GMSK oder einer OQPSK Modulation entspricht und daß die Abtastwerte im Empfänger mit einer Phase $j^{-i}$ gedreht werden, wobei i einen fortlaufenden Index des Abtastwertes bezeichnet.

4. Schaltungsanordnung mit einem DFE (Decision Feedback Equalizer) zum Entzerren eines Empfangssignals in einem digitalen Empfänger, wobei das Empfangssignal auf einer eindimensionalen oder in eine solche transformierbaren Signalkonstellation basiert, dadurch gekennzeichnet, daß eine Schaltung zum Berechnen der Koeffizienten des DFE aufweist, derart daß der Erwartungswert des quadrierten Realteils des Fehlers des Empfangssignals minimal ist.

Fig 4 a

Fig. 4 b

Fig. 4 c

Fig. 1

Fig. 2

Fig. 3

Fig. 5

Fig. 6

**Europäisches**
**Patentamt**

## EUROPÄISCHER RECHERCHENBERICHT

Nummer der Anmeldung

EP 98 81 1090

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | TU : "Optimum MMSE equalization for staggered modulations" ASILOMAR CONFERENCE, 1. - 3. November 1993, Seiten 1401-1406, XP000438537 New York, US * Seite 1401, rechte Spalte, Absatz 2 * * Seite 1403, linke Spalte, Absatz 2 * * Seite 1404, linke Spalte, Absatz 4 * | 1-4 | H04L25/03 |
| A | WO 98 16021 A (STATISTICAL SIGNAL PROCESSING) 16. April 1998 * Seite 21, Zeile 7 - Zeile 17 * | 1-4 | |
| A | EP 0 204 308 A (FUJITSU) 10. Dezember 1986 * Spalte 25, Zeile 27 - Spalte 26, Zeile 17 * | 1-4 | |
| | | | **RECHERCHIERTE SACHGEBIETE (Int.Cl.6)** H04L |

Der vorliegende Recherchenbericht wurde für alle Patentansprüche erstellt

| Recherchenort | Abschlußdatum der Recherche | Prüfer |
|---|---|---|
| DEN HAAG | 9. April 1999 | Scriven, P |

## ANHANG ZUM EUROPÄISCHEN RECHERCHENBERICHT
## ÜBER DIE EUROPÄISCHE PATENTANMELDUNG NR.

EP 98 81 1090

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-04-1999

| Im Recherchenbericht angeführtes Patentdokument | Datum der Veröffentlichung | Mitglied(er) der Patentfamilie | | Datum der Veröffentlichung |
|---|---|---|---|---|
| WO 9816021 A | 16-04-1998 | AU | 7439596 A | 05-05-1998 |
| EP 0204308 A | 10-12-1986 | JP | 1893309 C | 26-12-1994 |
| | | JP | 6014627 B | 23-02-1994 |
| | | JP | 61278219 A | 09-12-1986 |
| | | AU | 567637 B | 26-11-1987 |
| | | AU | 5824886 A | 08-01-1987 |
| | | CA | 1246260 A | 06-12-1988 |
| | | DE | 3689292 D | 23-12-1993 |
| | | DE | 3689292 T | 03-03-1994 |
| | | US | 4868850 A | 19-09-1989 |

EPO FORM P0461

Für nahere Einzelheiten zu diesem Anhang : siehe Amtsblatt des Europäischen Patentamts, Nr.12/82